# EUROPEAN PATENT SPECIFICATION

(11) **EP 3 968 103 B1**
(45) Date of publication and mention of the grant of the patent: **06.11.2024**
(21) Application number: 20196232.1
(22) Date of filing: 15.09.2020
(51) Int. Cl.: G06N 5/045, G06N 20/00, G05B 13/02

(54) **EXPLAINING MACHINE LEARNING OUTPUT IN INDUSTRIAL APPLICATIONS**
ERLÄUTERUNG EINER MASCHINENLERNAUSGABE IN INDUSTRIELLEN ANWENDUNGEN
EXPLICATION DE SORTIE D'APPRENTISSAGE MACHINE DANS DES APPLICATIONS INDUSTRIELLES

(43) Date of publication of application: 16.03.2022
(73) Proprietor: ABB Schweiz AG, 5400 Baden (CH)
(72) Inventor: KLOEPPER, Benjamin, 68199 Mannheim (DE); KOTRIWALA, Arzam, 68526 Ladenburg (DE); DIX, Marcel, 78476 Allensbach (DE)
(74) Representative: Maiwald GmbH

(56) References cited:
- EP-A1- 3 206 103
- US-A1- 2006 100 721
- US-A1- 2019 236 447

## Description

### FIELD OF THE INVENTION

The invention relates to systems and methods for explaining machine learning output in industrial applications.

### BACKGROUND OF THE INVENTION

Machine Learning (ML) models can provide useful functionality in industrial applications, e.g. detecting process anomalies, predicting events such as quality problems, alarms, or equipment failure, and performing automated quality checks. ML models that achieve good performance with few false positives and false negatives, such as Deep Learning networks, Support Vector Machines, or ensemble methods (e.g. Random Forest), are black box models. This results in at least the problems that the output of the ML model may not be trustworthy, and further investigation may be required to diagnose the cause of unreliable output. EP 3 206 103 A1 discloses such a black box predictive model for monitoring a mechanical system. Inputs relating to known fault conditions are applied to the model and the prediction results are compared to a targeted mode of the mechanical system. Configuration parameters for the mechanical system are determined that result in the prediction results matching the targeted model. This lack of insight regarding the 'reasoning' of the ML model inhibits the successful application of ML and limits its usefulness.

### SUMMARY OF THE INVENTION

There is therefore a need to explain how a machine learning model arrived at its output. This need is met by the subject-matter of the independent claims. Optional features are set forth by the dependent claims and by the following description.

According to a first aspect, there is provided an explainer system for explaining output of a prediction system. The prediction system comprises a system-monitor machine learning model trained to predict states of a monitored system. The explainer system comprises a perturbator to apply predetermined perturbations to original sample data collected from the monitored system to produce perturbed sample data, the explainer system being configured to input the perturbed sample data to the prediction system. The explainer system further comprises a tester configured to receive model output from the prediction system, the model output comprising original model output produced by the system-monitor machine learning model based on the original sample data and deviated model output produced by the system-monitor machine learning model based on the perturbed sample data, the deviated model output comprising deviations from the original model output, the deviations resulting from the applied perturbations. The explainer system further comprises an extractor configured to receive data defining the perturbations and the resulting deviations and to extract therefrom important features for explaining the model output. For example, important features may be identified by assign to each feature *x_{i,j}* an importance weight *w_{i,j}*. The monitored system comprises industrial equipment, and the original model output comprises a prediction concerning one or more of (i) a future state of the monitored system; (ii) a current state of the monitored system; (iii) a problem or fault in the monitored system.

The explainer system is thus able to provide an explanation as to how a black box ML model arrived at its output, thereby providing for easier verification of ML model output by humans. The explainer system provides insights regarding the source or location and nature of a predicted or detected issue. This is achieved using raw data collected from the technical system being monitored for explanation, instead of relying on engineered features used during training process. The explainer system links the output of ML model during operation of the technical system back to the data originally collected from the technical system, the explanation thus being more understandable to the human operator. This is based on the surprising recognition that, to achieve good performance, ML experts typically transform the raw data significantly before using it as features for the ML model, and that such engineered features may be hard to comprehend for the human operating or supervising a machine or production process.

In some advantageous implementations, the perturbator may be configured to determine the perturbations to be applied using one or more (i) random selection, (ii) optimization, and (iii) machine learning.

In the case of optimization, the perturbator may comprise a search optimizer configured to use an iterative optimization algorithm whose objective function maximizes the deviation in output caused by candidate perturbations when perturbed sample data comprising the applied candidate perturbations are input to the system-monitor machine learning model, wherein the perturbator is configured to apply the candidate perturbations determined by the search optimizer to be associated with the largest deviations. The search optimizer may be configured, iteratively and until completion of the optimization: to generate one or more current-iteration candidate perturbations by modifying one or more previous-iteration candidate perturbations in accordance with the optimization algorithm, to provide perturbed sample data comprising the applied current-iteration candidate perturbations to the prediction system for input to the system-monitor machine learning model, and to receive, as feedback, deviated output produced by the system-monitor machine learning model based on the perturbed sample data, and to determine from the feedback a deviation caused by the current-iteration candidate perturbations.

In the case of perturbation selection by machine learning, the system may further comprise one or more of: (i) a first perturbation selector machine learning model configured to receive as training data perturbed segment-deviation pairs and to learn to select perturbations that result in significant deviations in the model output of the system-monitor machine learning model; and (ii) a second perturbation selector machine learning model configured to receive as training data the perturbed segment-deviation pairs and to learn to select significant perturbations that do not result in significant deviations in the model output.

Again in the case of perturbation selection by machine learning, the system may further comprise one or more of: (i) a first perturbation selector machine learning model trainable to select perturbations which result in significant deviations in the model output of the system-monitor machine learning model and for which the respective perturbed samples, when input to a discriminator machine learning model trained to classify samples collected from the monitored system as original or unperturbed, are classified by the discriminator machine learning model as original samples; and (ii) a second perturbation selector machine learning model trainable to select significant perturbations which do not result in significant deviations in the model output of the system-monitor machine learning model and for which the respective perturbed samples, when input to the discriminator machine learning model, are classified thereby as original samples.

The system may comprise both the first and second perturbation selector maching learning models, and may further comprise a perturbation finder configured to receive perturbed samples created by both the first and second perturbation selector machine learning models, and to output one or more of the perturbations contained in the perturbed samples as the predetermined perturbations.

The original sample data to which the perturbations are applied may be unpreprocessed original sample data collected from the monitored system. The perturbator may be configured to apply the perturbations to the unpreprocessed original sample data to produce unpreprocessed perturbed sample data, before the unpreprocessed perturbed sample data is formatted by a pre-processor to produce preprocessed perturbed sample data suitable for input to the system-monitor machine learning model. In this way, human readability of the important features provided by the explainer system may be improved. Alternatively, the original sample data to which the perturbations are applied may be preprocessed original sample data produced by a pre-processor by formatting unpreprocessed original sample data collected from the monitored system. In this case, the perturbator may be configured to apply the perturbations to the preprocessed original sample data to produce preprocessed perturbed sample data suitable for input to the system-monitor machine learning model.

In particularly advantageous applications of the explainer system, the original sample data may comprise one or more of (i) time-series data comprising sensor readings from the industrial equipment, wherein the machine learning model (16) is configured to make predictions regarding production quality or to detect anomalies in the time-series data; (ii) event data, wherein the machine learning model (16) is configured to detect anomalies or to predict alarms in the industrial equipment; (iii) image data, wherein the machine learning model (16) is configured to detect anomalies in the industrial equipment.

The perturbator may be configured to apply the perturbations by oversampling the original sample data, the oversampling comprising clustering samples in the original sample data and generating new samples from within the clusters. Oversampling provides an especially easy and robust manner of perturbing data.

The original sample data may comprise images, wherein the perturbator is configured to apply the perturbations using data augmentation techniques.

The extractor may be configured to use an interpretable model to extract the important features for explaining the model output. The interpretable model may comprise one or more of (i) a linear regression model, (ii) a decision tree.

The tester may be further configured to identify the deviations between the deviated model output and the original model output and to map the identified deviations to the applied perturbations to provide mapped perturbed segment-deviation pairs as input data for the interpretable model.

According to a second aspect, there is provided a method for explaining output of a prediction system, the prediction system comprising a system-monitor machine learning model trained to predict states of a monitored system. The monitored system comprises industrial equipment. The method comprises applying predetermined perturbations to original sample data collected from the monitored system to produce perturbed sample data, and inputting the perturbed sample data to the prediction system. The method further comprises receiving model output from the prediction system, the model output comprising original model output produced by the system-monitor machine learning model based on the original sample data and deviated model output produced by the system-monitor machine learning model based on the perturbed sample data, the deviated model output comprising deviations from the original model output, the deviations resulting from the applied perturbations and the original model output comprising a prediction concerning one or more of (i) a future state of the monitored system; (ii) a current state of the monitored system; (iii) a problem or fault in the monitored system. The method further comprises extracting important features for explaining the model output from data defining the perturbations and the resulting deviations. According to a third aspect, there is provided a computer program product comprising instructions which, when executed by a computer, cause the computer to perform the method of the second aspect.

Any optional features or sub-aspects of the first aspect apply as appropriate to the second aspect.

The terms "original" and "perturbed" are used herein according to whether or not the sample data in question includes perturbations introduced by the perturbator. Original sample data may also be referred to herein as unperturbed or undistorted sample data.

The terms "raw" and "feature" are used herein according to whether or not the sample data in question has been processed by a pre-processor to format it for input to the system-monitor machine learning model. Raw sample data may also be referred to herein as unformatted or unpreprocessed sample data. Feature sample data may also also be referred to herein as formatted or preprocessed sample data.

By "perturbation" is meant any change or distortion to the sample data introduced solely or mainly for the purposes of explaining the ML model output.

By "deviation" is meant any change, difference or distinction in the ML model output caused solely or mainly by the introduction of perturbations to the sample data provided as input to the ML model.

"Sample data" may also be referred to as samples.

"Important features" may also be referred to as feature importances.

The above aspects and examples will become apparent from and be elucidated with reference to the following detailed description.

BRIEF DESCRIPTION OF THE DRAWINGS

Illustrative examples will be described with reference to the following drawings, in which:-
Fig. 1 illustrates one example of an explainer system for explaining output of a system-monitor machine learning model;
Fig. 2 illustrates one example of a method for explaining output of a system-monitor machine learning model;
Fig. 3 illustrates another example of an explainer system for explaining output of a system-monitor machine learning model;
Fig. 4 illustrates data flow perturbation generation with an optimizer;
Fig. 5 illustrates one example of a method of training ML models to select perturbations;
Fig. 6 illustrates another example of a method of training ML models to select perturbations;
Fig. 7 shows usage of trained ML models to generate perturbations;
Fig. 8 relates to one exemplary application of the described systems and methods in explaining anomalies in industrial image data;
Fig. 9 illustrates the perturbation of time-series data with the assistance of interpolation; and
Fig. 10 shows a contextualisation process for contextualizing explanations of machine learning models in technical systems.

### DETAILED DESCRIPTION OF EMBODIMENTS

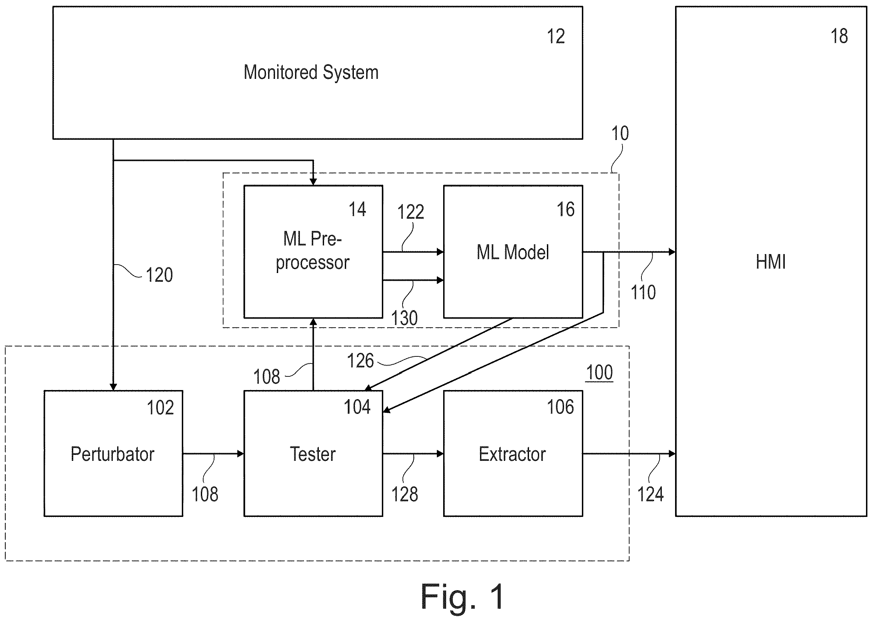

Fig. 1 shows an explainer system 100 for explaining output 110 of a prediction system 10 comprising a system-monitor machine learning (ML) model 16 trained to predict states of a monitored system 12. Figure 1 shows the components of the prediction system 10 and of the explainer system 100 and the data flow between components (as indicated by arrows).

The monitored system 12 comprises industrial equipment such as an industrial automation system, a discrete manufacturing system, and so on. The monitored system 12 may further include the technical equipment required for generating data (e.g. sensors) and collecting the data (e.g. a condition monitoring system or data collector).

The prediction system 10 comprises an ML pre-processor 14 and a system-monitor ML model 16. Original raw sample data 120 collected from the monitored system 12 are formatted by the ML pre-processor 14 to turn them into original feature sample data 122 containing features in the format on the basis of which the ML model 16 was trained. In other words, the pre-processor 14 formats the original raw sample data 120 for input into the ML model 16 as original feature sample data 122. In a first, prediction data flow, the ML model 16 produces an original model output 110 based on the original feature sample data 122 which is sent to the human machine interface (HMI) 18 for display to a human operator. The original model output 110 comprises a prediction concerning for example one or more of
(i) a future state of the monitored system 12; (ii) a current state of the monitored system 12;
(iii) a problem or fault in the monitored system 12.

According to the present disclosure, this first flow of data is supplemented by a second, explanation data flow. For each prediction (or only interesting predictions such as problems or failures), the original raw sample data 120 is also fed to the explainer system 100, which comprises a perturbator 102 (which may also be referred to as a perturber), a tester 104, and an extractor 106.

The perturbator 102 is configured to receive the original raw sample data 120 and to apply predetermined perturbations to the original raw sample data 120 to produce perturbed raw sample data 108. For example, the perturbator 102 may perturb the original raw sample data 120 to generate new, artificial, perturbed raw sample data 108 that are similar but different in certain respects to the original raw sample data 120. The perturbation is done in such a way that well-defined segments of the original raw sample data 120 are changed. How the original raw sample data 120 are exactly perturbed may vary according to the data type and application. For example, for (continuous) signal data, segments of the original raw sample data 120 could be replaced with historical data known to be normal. Additionally or alternatively, segments could be smoothed, outliers could be removed, and so on. For (discrete) event data, events could be removed or added to the original raw sample data 120 or their ordering could be changed. For image data, parts of the original raw sample data 120 could be replaced by neutral grey areas, or data augmentation techniques could be used, e.g. rotation, cropping, resizing, changing colours, and so on. A further way of perturbing the original raw sample data 120 is to oversample the data (as may be done to solve data/class imbalance problem), for example by first clustering the original raw sample data 120, and then generating new samples within these clusters. Oversampling provides an especially easy and robust manner of perturbing data. Further ways in which the original raw sample data 120 may be perturbed are discussed with respect to particular applications of the explainer system 100 below, and yet further ways will become apparent to the skilled person from the present disclosure and are thus encompassed herein.

The tester 104 is configured to input the perturbed raw sample data 108 to the system-monitor ML model 16 (in this example via the ML pre-processor 14) and to receive model output from the system-monitor ML model 16. The model output comprises deviated model output 126 derived from the perturbed raw sample data 108 as well as the original model output 110 derived from the original raw sample data 120. The deviated model output 126 comprises deviations from the original model output 110 resulting from the applied perturbations. The tester 104 may be further configured to identify the deviations between the deviated model output 126 and the original model output 110, and to map the identified deviations to the applied perturbations, or perturbed segments of the perturbed raw sample data 108, to provide mapped perturbed segment-deviation pairs as input data 128 for an interpretable model (described below). The tester 104 thus receives the perturbed raw sample data 108 from the perturbator 102 and (in this example) feeds it into the pre-processor 14, which formats the perturbed raw sample data 108 for input into the ML model 16 as perturbed feature sample data 130. The tester 104 receives the deviated model output 126 produced by the ML model 16 on the basis of the perturbed feature sample data 130. The tester 104 sends the information 128 including the type of perturbation applied and/or the perturbed segments to the extractor 106. The tester 104 may thus be described as a component that feeds perturbed raw sample data 108 to the trained ML model 16 (in this example via the ML pre-processor 14) and maps the deviation on the prediction to the perturbed segments and/or perturbations of the perturbed raw sample data 108. While figure 1 shows the tester 104 inputting the perturbed raw sample data 108 to the prediction system 10, it will be understood that the perturbator 102 or any other component of the explainer system 100 could equally perform this function.

The extractor 106 is configured to input the data 128 defining the perturbations/perturbed segments and resulting deviations, for example in the form of mapped perturbed segment-deviation pairs, to an interpretable model and to extract therefrom important features 124 for explaining the model output. The extractor 106 may function according to an interpretable ML algorithm such as linear regression. The interpretable ML algorithm models how perturbations on certain segments impact the model output of the ML model 16. Perturbed segments that trigger significant differences in the model output of the ML model 16 are identified as those segments that are most relevant for the model output of the system-monitor ML model 16. The extractor 106 may thus be described as a component that uses interpretable ML algorithms (like linear regression or decision trees) to identify the relevant features from the pairs of perturbed segments (as predictors) and the deviation in system-monitor ML model output (as the target).

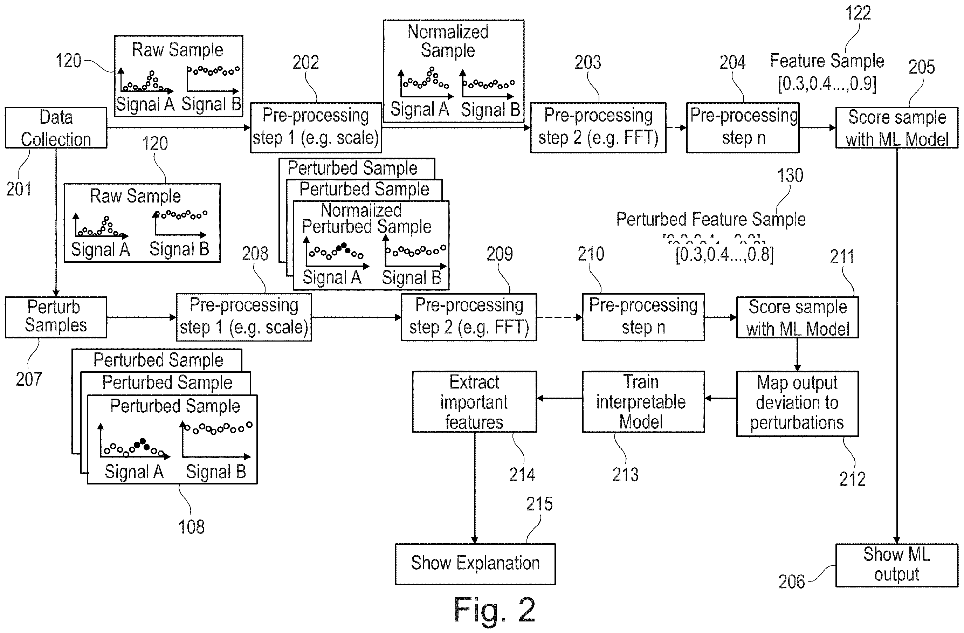

Fig. 2 shows a method for explaining output of the system-monitor ML model 16. In more detail, Fig. 2 shows the process of data collection (201), the first, prediction data flow (202-206) and the second, explanation data flow (207-215). In the following, the steps of the process are briefly described.

(201) Original raw sample data 120 is collected from the monitored system 12. Signal data (in this example, two signals, Signal A and Signal B) may be sampled over a period of time. The original raw sample data 120 could also comprise images taken of the monitored system 12 or sequences of events and alarms, for example.

(202) For input to the ML model 16, the original raw sample data 120 may be pre-processed. The type and order of the pre-processing steps depends on the specific ML model 16. As shown in Fig. 2, exemplary pre-processing step (2) comprises scaling (normalizing) the original raw sample data 120 to values between 0-1.

(203) In an optional second pre-processing step, a fast-Fourier-transformation (FFT) is performed.

(204) The n-th pre-processing step produces the original feature sample data 122 in the format that the ML model 16 expects, namely in the same format as that using which the ML model 16 has been trained, for example a vector of values.

(205) The ML model 16 is used to produce an original model output 110, e.g. a prediction of an event or failure, or detection of an anomaly, etc.

(206) The original model output 110 (event, failure, anomaly) is shown on the HMI 18.

(207) The explanation data flow begins. The original raw sample data 120 that were used to produce the original model output 110 are perturbed by the perturbator 102, producing artificial, perturbed raw sample data 108. The perturbed raw sample data 108 may differ from the original raw sample data 120 in specific data segments. For instance, in one illustrative example, outlier detection may be performed to detect possible features that trigger a particular prediction. For example, three consecutive points in a sliding window in the timeseries may be compared. If one of the three points is far removed from the other two, it is likely to be the cause of the particular prediction. The outlier may then be replaced with a sliding average of the two other values to create the perturbation. It will be understood that other sizes of sliding window may be used (e.g. 5, 10, 100). This concept is illustrated in Fig. 2, in which Signal A of the original raw sample data 120 is altered (for instance by taking the average of the two neighbouring points) in the perturbed raw sample data 108, with the perturbed samples shown as filled-in points.

(208) The same pre-processing step as in step (2) may be applied to the perturbed raw sample data 108.

(209) The same pre-processing step as in step (3) may be applied to the perturbed raw sample data 108.

(210) The last pre-processing step may be performed to provide the perturbed feature sample data 130. The pre-processing steps (8)-(10) may be performed in the same way as steps (2)-(4).

(211) Using the perturbed feature sample data 130, a new, deviated model output 126 is produced with the system-monitor ML model 16. In other words, the perturbed feature sample data 130 is scored with the ML Model 16.

(212) The deviation between the original model output 110 and the deviated model output 126 is mapped onto segments perturbed in the perturbed raw sample data 108.

(213) An interpretable model is trained, for instance a linear regression model. The combination of present perturbed segment and deviation from the original model output 110 serves as the samples. The present perturbed segments serve as the predictors or features and the deviation serves as the target.

(214) From the interpretable model, the most relevant perturbed segments are extracted as being the important features 124 for explaining the model output. In case of linear regression, this may be achieved by selecting the perturbed segments with the highest weight. In case of a decision tree, the first decision rules could be extracted. It will be understood that other forms of interpretable model may be used, such as logistic regression.

(215) The explanation in the form of the important features 124 is shown on the HMI 18. The explanation may be presented by highlighting the relevant features of the original sample. In case of a time-series, for instance, the relevant elements of the time-series may be highlighted in a different colour or with a bounding box drawn around a section in the timeseries. For an image, those pixels not relevant to the output could be shown with less saturation than the relevant pixels or be set to a grey colour. For event data, the explanation may comprise a list containing only the relevant events. In many cases it will be sufficient to trigger the explainer system 100 only for such model output that is of interest to the human operator, e.g. prediction of failures, detection of anomalies, detection of quality issues, etc.

As described above, the perturbations are applied by the perturbator 102 to the original raw sample data 120 collected from the monitored system 12 before the resulting perturbed raw sample data 108 is formatted by the pre-processor 14 to provide the perturbed feature sample data 130 suitable for input to the system-monitor ML model 16. Doing so may improve human readability of the important features 124 provided by the explainer system 100. Additionally or alternatively, however, perturbations may be applied to the original feature sample data 122 obtained from the original raw sample data 120 after formatting of the latter by the pre-processor 14.

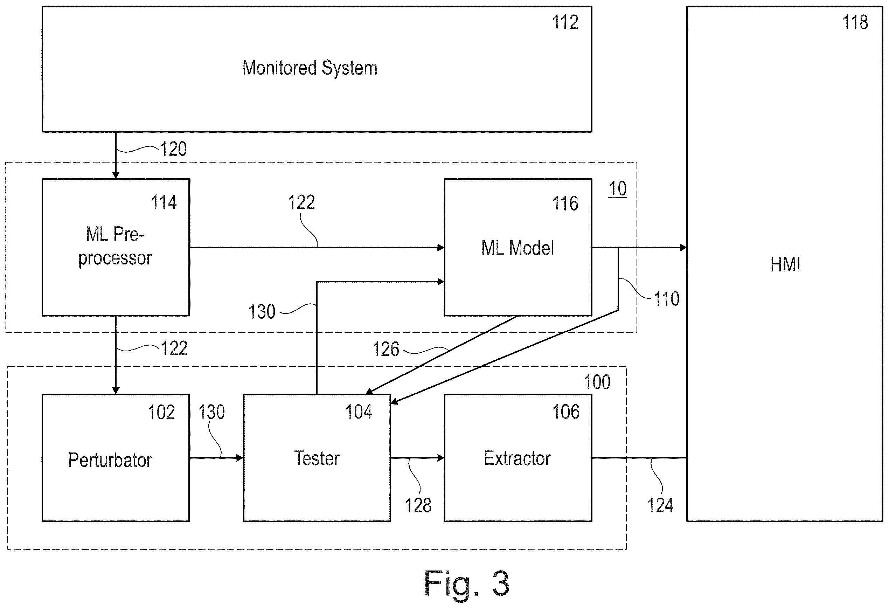

For example, Fig. 3 shows an alternative implementation of the explainer system 100 in which the perturbator 102 applies perturbations not to the original raw sample data 120 collected from the monitored system 12 but rather to the (already pre-processed) original feature sample data 122 in order to provide the perturbed feature sample data 130 for direct input to the ML model 16. In other respects, the implementation is identical to that of Fig. 1.

The number of possible perturbations can be large such that determining the right perturbation to be applied can enhance operation of the explainer system 100. The explanation concerning the prediction of the model 16 should preferably be provided in a timely fashion. Although numerous determination methods are envisaged by the present disclosure, three methods used by the perturbator 102 are explained herein in further detail: (i) random selection, (ii) optimization, and (iii) machine learning.

Random selection may entail selecting the perturbation entirely randomly.

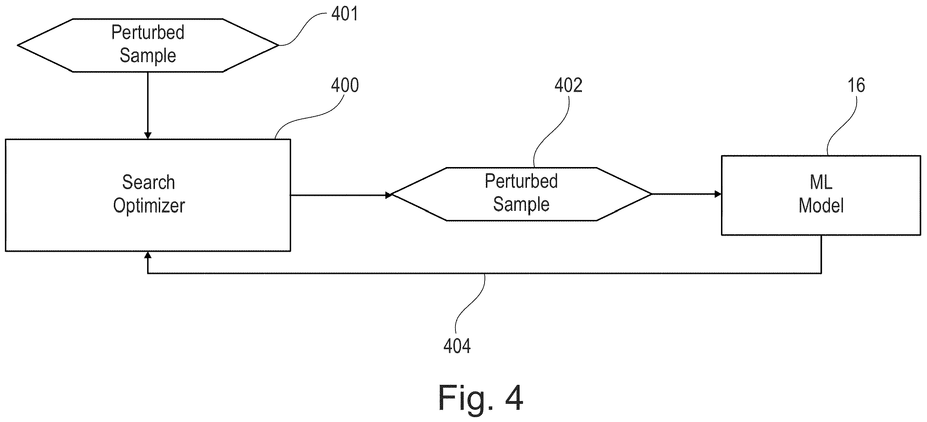

Figure 4 illustrates determination of the perturbation by optimization. The perturbator 102 may further comprise a search optimizer 400 configured to use an iterative optimization algorithm whose objective function maximizes the deviation in output caused by candidate perturbations when perturbed sample data comprising the applied candidate perturbations are input to the system-monitor machine learning model 16. The perturbator 102 may be configured to apply the candidate perturbations determined by the search optimizer 400 to be associated with the largest deviations. The search optimizer 400 may be configured, iteratively and until completion of the optimization: to generate one or more current-iteration candidate perturbations by modifying one or more previous-iteration candidate perturbations in accordance with the optimization algorithm, to provide perturbed sample data 402 comprising the applied current-iteration candidate perturbations to the prediction system 10 for input to the system-monitor machine learning model 16, and to receive, as feedback 404, deviated output produced by the system-monitor machine learning model 16 based on the perturbed sample data 402, and to determine from the feedback 404 a deviation caused by the current-iteration candidate perturbations.

Optimization treats the search for the perturbations as a search process. The optimization algorithm, which may comprise for example an evolutionary algorithm, a simulated annealing or a gradient descent, controls which perturbations are selected based on the change in the model output. In particular, the objective function of the optimization algorithm may be to maximize the deviation in the ML model output. In one example, the optimization process is organized hierarchically, e.g. attempting first to select the most relevant signal, the most relevant time-series section and finally the most relevant type of perturbation. Referring to figure 4, the search optimizer 400 generates one or more initial candidate perturbed samples 401 and scores them with the system-monitor ML model 16. The change in model output is provided as feedback 404 to the search optimizer 400. The search optimizer 400 uses the feedback 404 to generate one or more next candidate perturbed samples 402. Constraints on the optimization problem can control to which extent the algorithm can perturb the samples. Alternatively, the similarity between the perturbed samples 402 and the original samples can be part of the objective function.

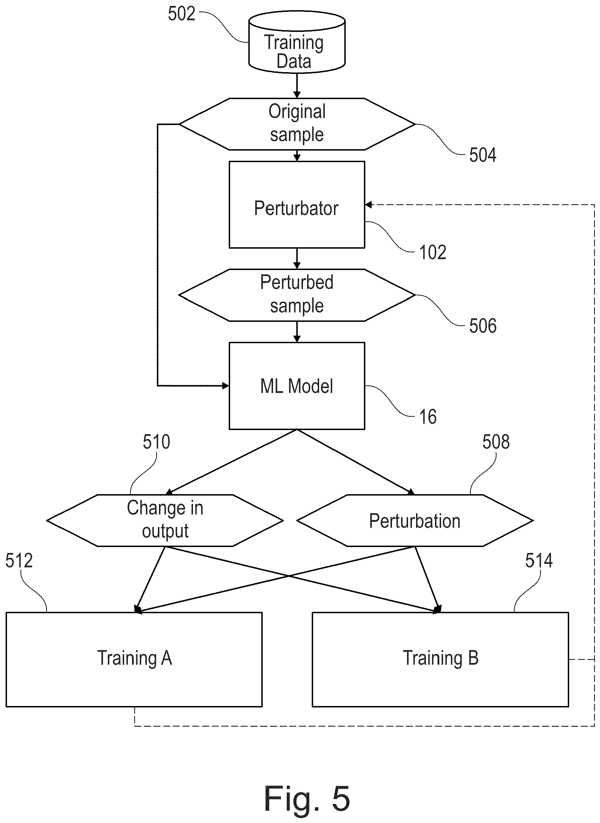

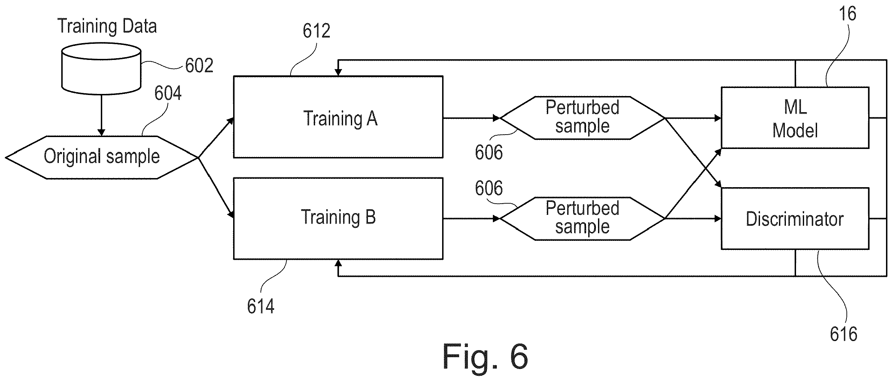

Figures 5 and 6 illustrate perturbation determination using machine learning. Although numerous applications of machine learning for this purpose are envisaged by the present disclosure, two particular processes are described further herein: (i) learning the selection of perturbation, and (ii) direct perturbation by the ML model 16.

Figure 5 shows the training process to learn the selection of perturbation. The training data 502 contains original samples 504 that can be scored by the ML model 16. The perturbator 102 perturbs the original samples 504 to create perturbed samples 506 and both original samples 504 and perturbed samples 506 are scored by the ML model 16. The type of perturbation 508 and the change (deviation) 510 in model output are used as training data for the machine learning. Training process A 512 learns to select perturbations that create a significant change in the model output and training process B 514 learns to select significant perturbations that do not change the model output significantly.

Figure 6 shows the training process for direct perturbation by the ML model 16. Training processes A and B learn to perturb an original sample 604 taken from training data 602 to create a perturbed sample 606 so that a discriminator 616 (another ML model) believes the perturbed sample 606 to be an original sample. Training process A learns to perturb the original sample 604 in such a way that the model output changes significantly. Stated differently, the loss of A may be smaller the larger the change in the output of the ML model becomes. This way A learns to perturb features that have a strong impact on the output of the model. On the other hand, training process B learns to perturb the original sample 604 significantly in such a way that the model output does not change significantly. Put another way, the loss of B may be smaller the smaller the change in the output of the ML model becomes. This way A learns to perturb features that have a strong impact on the output of the model. Thus, both the change in the model output and e.g. the probability that the sample is an original sample which the discriminator 616 assigns to the perturbed sample 606 may be part of the loss function of both training processes. The discriminator 616 may employ a discriminative model, i.e. a machine learning model which receives a lower loss if a data sample is correctly labelled as a "real data sample" (from e.g. an industrial process) or "artificially generated data sample" and receives a higher loss if this classification is performed wrongly (i.e. an artificially generated data sample is labelled as real or vice versa). Through training, the discriminator 616 improves its accuracy in distinguishing the data samples. Algorithms A and B, on the other hand, receive their loss based on two factors: (i) how strongly does the output of the ML model 16 change (for model A, a strong change results in a small loss; for model B, a strong change results in a large loss) and (ii) is the discriminator fooled into assigning a high probability to the perturbed sample that the sample is real. A high probability for real from the discriminator 616 results in a low loss for both A and B. This way, A and B generate the perturbation that creates the required change in the output of the ML model 16 but that nonetheless resembles realistic data.

The original and perturbed samples shown in Figures 5 and 6 may be raw samples or feature samples with pre-processing being performed at the appropriate juncture to render the samples suitable for input to the ML model 16.

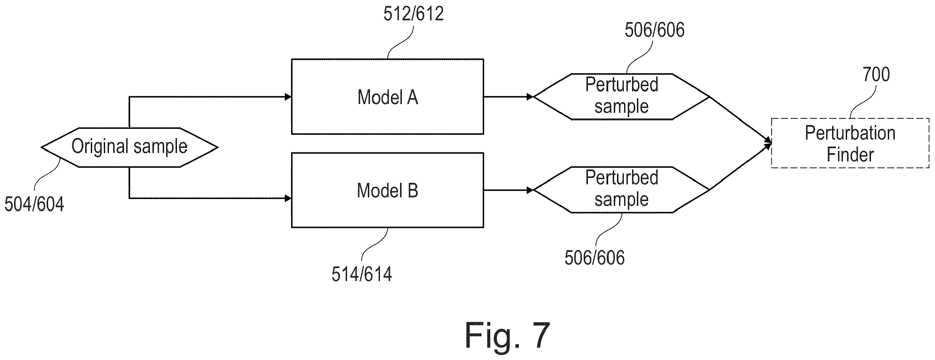

Figure 7 shows that in both cases the trained models A and B (512/612 and 514/614, respectively) can be used to create a perturbed sample 506/606 that is suitable for the explanation process. To find the perturbation that was applied, a perturbation finder 700 may be employed to find the perturbation, e.g. by applying some distance measure to the original sample 504/604 and the perturbed sample 506/606. This may be beneficial in the case that the output of model A and model B is a new sample and not the difference to the original sample. For instance, for an image, the output may be a new matrix of pixel values, not the changes to individual pixel values. The explainer 100 may benefit from precise information on which feature (e.g. pixel) has been changed and by how much. In an analogy for a time series, the output of model A and B may be an entirely new time series (of same or similar length) and not the changes at each index of the time series. In the image example, finding the perturbation again may comprise identifying those pixels that have changed, for example by subtracting the original pixel matrix from the perturbed pixel matrix. In the time-series example, the perturbations may be found by subtracting values at the same index. The resulting values represent distance measures between the original sample 504/604 and the perturbed sample 506/606. To this end, the explainer system 100 may thus comprise both trained model A 512/612 and trained model B 514/614 along with the perturbation finder 700 configured to receive the perturbed samples created by both models, and to output one or more of the perturbations contained in the perturbed samples as the predetermined perturbations. The perturbation finder 700 may be configured to find the perturbations by comparing the features or values in the original sample and the perturbed sample e.g. by subtracting values in the original sample 504/604 from those in the perturbed sample 506/606.

In a variant of the invention, the machine learning models for selecting perturbations are used directly to explain the model output without the explanation data flow depicted in figure 2. The selected perturbations may be directly used as explanation.

As mentioned above, the original sample data 120, 122 may comprise one or more of (i) time-series data, (ii) event data, (iii) image data.

### Application to image data

An application area of machine learning is for image recognition, such as applying deep learning to train a model that is able to classify images into what types of images they represent, e.g. images of bikes vs. images of cars. Deep learning is often used also to identify anomalies in images. For example, if most images only show bikes, but there are some rare images which show also a person sitting on the bike, then those images would be recognized as an anomaly. One example of a deep learning algorithm for detecting anomalies in images is the so-called autoencoder. In an industrial context, image recognition and detecting anomalies in images can be very useful to visually detect unwanted deviations in production. An anomaly detection algorithm is able to score a picture to indicate to what extent this picture contains an anomaly. The challenge in the industrial domain is that images can be very complex, showing a lot of details. For example, a process plant can have hundreds of pipes and instruments. An anomaly detection algorithm may only indicate to the operator that there is an anomaly in the picture, but it will not be able to explain to the operator where the anomaly resides. The operator may have difficulty searching for the anomaly in this picture to assess whether the anomaly is true or a false positive.

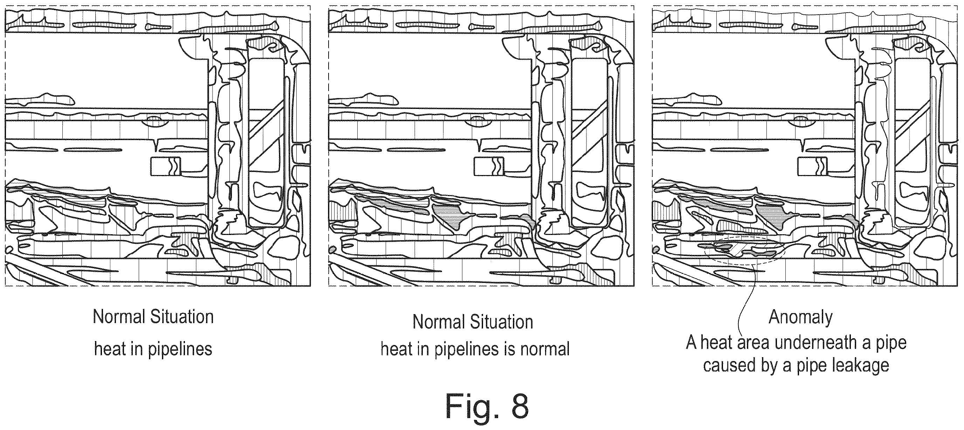

IR/heat images may be used to observe normal plant operation. With reference to figure 8, heat images may be taken from pipeline systems and used as original sample data 120. As the fluid running through the pipelines can be hot, some heating of the pipeline images can be normal. However, in the picture on the right of figure 8, there is heat detected underneath the pipeline, which may explain a pipeline leakage. The explainer system 100 is able to find an explanation for this anomaly by isolating the parts of the image which do not belong to the plant equipment, such as the floor, and by replacing the floor with a normal image of the floor. If the resulting image leads to a lower anomaly score, the anomaly found underneath the pipeline may be due to a pipeline leakage there. But if the anomaly was found on picture areas related to the equipment itself, then this may be not a true anomaly as heat changes in the pipelines can occur in this example.

The explainer system 100 may be applied in conjunction with perturbation of images depicting plant equipment to find which equipment is defective/broken. When observing images of plant equipment, e.g. that show different types of equipment in a plant section, having image representations of the equipment depicting how the equipment is expected to appear, and depicting equipment found to be abnormal, can help to find the equipment in the picture which has changed. Such a change could be due to the equipment being defective or broken, if the image representation of the equipment is normally not expected to change. In the example of figure 8, given several sample images of "normal" operation, acceptable variance in the heatmap may be defined. In the case of an anomaly, the heatmap would look different from those observed during normal operation. Perturbations may be used to replace parts of the abnormal image with normal parts and to observe the effect on the model output. These perturbations may be "intelligent" perturbations in the sense that image parts corresponding to known equipment or objects (e.g. motor, pipe, floor, chair, etc) may be such that the perturbations may be applied in a meaningful way.

The explainer system 100 may be applied in conjunction with perturbation of the parts of images depicting assemblies. In discrete manufacturing, e.g. with help of industrial robots, image recognition may be used e.g. for quality checks of the assembled product. Here, an example for a quality issue is one of the many parts being assembled being faulty (e.g. it may have dents or is broken). An anomaly detection algorithm may identify the image of the assembly with the faulty parts as an anomaly. To be able to identify why this is an anomaly, parts of the picture could be replaced by "normal" parts, and then the image could be given to the anomaly detection model again to predict its anomaly. If the anomaly is now gone, it was probably due to the part-image replaced. Thereby the part could be identified to be the faulty part.

### Application to time-series data

Industrial automation systems monitor and log a lot of time series data, which are typically sensor readings from industrial equipment. In process control, it could be e.g. readings of pressure sensors, temperature sensors, or flow sensors, or in discrete manufacturing it could be readings about voltage, current, or temperatures of machinery. Here, time series analysis with help of machine learning algorithms can be used, for example, to make predictions, to make classifications e.g. to classify batch production quality, or to detect unusual behaviour in the time series. A feasible approach to time series analysis is e.g. to use RNN/LSTM neural networks for time series prediction and classification, and autoencoders or one-class classifiers for anomaly detection.

In the industrial domain, being able to explain model outputs of time series data can be useful because being able to see anomalies in time series is not always trivial for a human (just like it is not easy for an ordinary human to read an electrocardiogram). Here perturbation approaches can help to explain time series analysis.

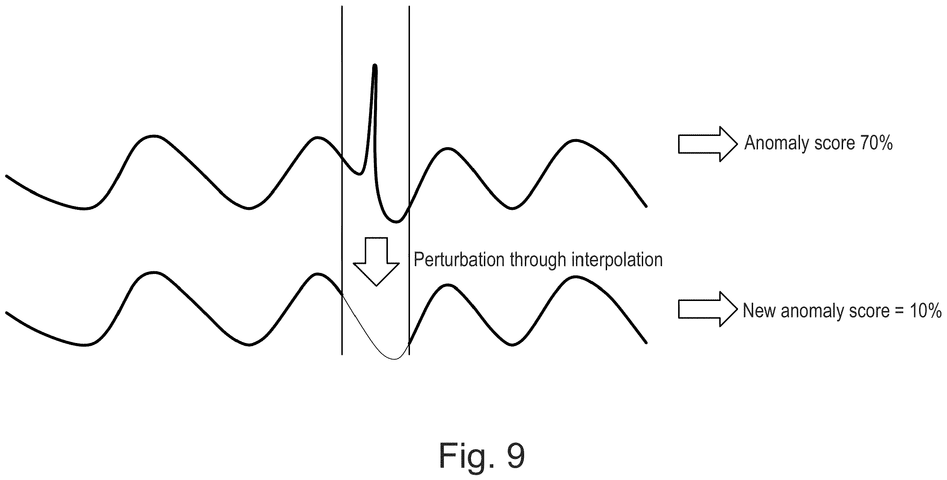

The explainer system 100 can be used to perturb a single time series by injecting "normal" data. Figure 9 illustrates perturbating time series data with the help of interpolation. When analysing a time series, such as for anomalies, it is often not easy for a human to find the anomaly. For example when looking at the chart image of the time series (such as in the above mentioned electrocardiogram example), the anomaly may hidden in the oscillations and not easy to find. In the industrial domain, there are often similar features in time series data, such as seasonality, that makes spotting anomalies a challenge. Here the explainer system 100 is able to offer an explanation for time series analysis outputs. An approach could be to divide the analysed time window into subsections such as the phases of the oscillation. Then, one single subsection is replaced by a normal oscillation example taken from the training data and the whole time series window is again tested for anomaly. If the model now predicts the window to be less abnormal, it was probably due to this replaced subsection. Hence, the abnormal area could be isolated for the human operator. Instead of replacing the sections by normal data from the training set, another way could be to interpolate sections or forward-fill the section with the last value from the last section (function call "ffill" in python), and then pass the time series again to the model. If the anomaly is smaller it was probably due to the perturbated section.

The explainer system 100 can be used to perturb single signals in multi-variate analysis approaches. In the industrial domain a piece of equipment, such as a robot in discrete manufacturing, or a motor in continuous processes, typically has several sensors. For example, the motor may have log readings for speed, current, voltage, thermal capacity, power factor, time to trip, and so on. Instead of just looking at single sensor readings, often it makes sense to extend the analysis to a multi-variate approach in order to get a more complete picture of this equipment. Perturbation can help to better explain multi-variate time series analysis. For example, when performing anomaly detection, a machine learning model such as an autoencoder would simply say that the current motor situation is abnormal, but there will be a need to better understand why. A possible approach through perturbation is to replace a single sensor from the set of all the sensors of the motor. The replacement would be done by taking another example reading for this sensor from the training dataset that represents normal motor behaviour. If the model now determines the equipment to be less abnormal, the original anomaly was probably due to this sensor. Say, this sensor that was replaced was a temperature sensor, then this may provide an explanation for a thermal issue on this motor.

### Application to event data

Table 1 shows an example of typical raw event data that might be collected from a process plant. The raw sample in this case will be a collection of such alarms and events. In many cases, the sample can include many more lines, for instance in case of alarm floods or when the ML algorithms also analysis normal events and not just operator visible alarms. A ML model might be used here to detect uncommon problems (anomalies) or to predict alarms of particular interest. ML models based on event data will often use the number of occurrences of certain types of events as the feature (a bag of events, similar to a bag of words in natural language processing), or analyse the content of specific fields in the events (e.g. the message), or analyse the sequence and order of events.

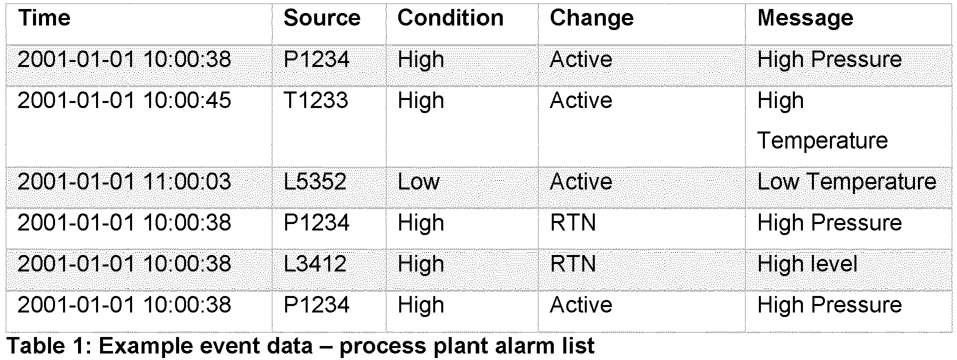

The feature modelling as well as efficient perturbation in event data require domain knowledge. For instance, industrial entries in industrial event logs cannot be compared based on a single column. Often, event types needs to be constructed from several columns. In the above example, two events with same source, condition and change can be considered to be of the same type. In the above example, for instance, a bag of events would appear as the following in Table 2:-

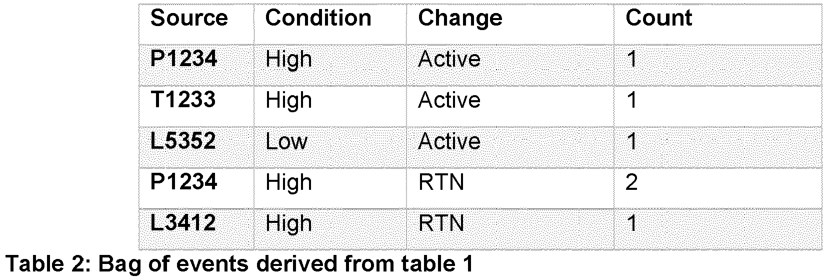

The perturbation of the learner should reflect on the features the machine learning model uses. Otherwise, the perturbation is unlikely to have a clear effect on the ML output.

The explainer system 100 can be used to perturb the bag of events. If the ML model 16 uses a bag of events as the feature, varying the count values of the event types offers one kind of perturbation. To effectively perturb the sample, using knowledge about historic data can be useful. For example, the perturbator 102 might use the empirical distribution of the events types to vary the count values and change especially such events that deviate significantly from their expected count to a more likely value. The empirical distribution might consider as well the presence of the other events, for instance estimated with the help of a Naive Bayes classifier. Another strategy might be to provide the perturbator 102 with information about which events usually appear together. If such pairs are incomplete in the sample, the perturbator might add the missing event type. The usage of such insights from historical data may be mixed with random variation to avoid a bias towards certain historical patterns. Such perturbation can be easily presented to the user: those event types for which varying the count results in a significant change in the ML output (and for instance are assigned high weights by the linear regression of the extractor) can be presented, e.g. the event type X occurs to often or too less in the sample.

The explainer system 100 can be used to change the order. If the ML model 16 uses features that reflect the sequence or order of events, the perturbation may change the order. This can be done in a randomized fashion: first pick one row from the raw sample data and then second one and change their timestamp. Again the perturbator 102 might leverage information derived from historical data, for instance how events are typically ordered (how often does A follow B vs. B follows A) to find perturbations that have a likely impact on the ML output. Again, the identified features can be presented to the human: Event A comes before event B and not the other way round.

The explainer system 100 can be used to inject historical data. A generic way to perturb event data is to replace data in the current sample with historic data. For instance, the perturbator 102 might pick n subsequent rows randomly from the sample and inject n subsequent rows with their respective time distance from the historical data. This type of perturbation will implicitly leverage the distribution of events in the historical data and is agnostic regarding the (possibly unknown) feature on the basis of which the ML model 16 was trained. In this case, the human may be presented with the event that has been removed from the sample thereby leading to a considerable change in the output of the ML model 16.

The explainer system 100 can be used in mixing the strategies. If it is not known which features the ML model 16 uses (in the case of a third party model or deep learning network trained on the raw event list) the above strategies can be mixed.

The explainer system 100 can be used in encoding the perturbation for the interpretable model of the extractor 106. If it is known that the ML model 16 is trained on a bag of events feature sample, the interpretable model can be use the list of event types as features with the change in the count as a value in the various samples. The user may be presented with information identifying which event types triggered the ML model. Changing the order of events can be encoded with a binary value for each pair of rows. Only pairs that actually have been changed may be encoded, rather than all possible pairs. The user may be presented with an indication of which order of events triggered the algorithm's output. For all other situations a binary vector capturing whether a row in the raw sample has been changed or not is a possible encoding. The user may be presented with an indication of which rows triggered the algorithms output.

In other words, there is provided a system and method to explain machine learning model outcomes related to technical system like predictions of future states or detections of the current state by perturbation the input data of the machine learning model and analysing the prediction on the perturbed output. The system may explain the output of machine learning models by perturbing the raw data and not the pre-processed sample data of the machine learning model. The system may be for signals and time-series data. The system may be for event data. The system may be for industrial image data. The system may use an optimization algorithm to select perturbations that lead to a significant change in the machine learning model output, to find significant perturbations that result in only a small change in the machine learning model output, and to find perturbations that are useful for explanation. The system may use machine algorithms to select predefined types of perturbations that lead to a significant change in the machine learning model output, to find significant perturbations that result in only a small change in the machine learning model output, and to find perturbations that are useful for explanation. The system may use generative machine algorithms to find perturbations that lead to a significant change in the machine learning model output, to find significant perturbations that result in only a small change in the machine learning model output, and to find perturbations that are useful for explanation.

The following further disclosure is provided concerning a method and system to contextualize explanations of machine learning models in technical systems.

Explanation of ML model output provides input on what elements of the sample data was driving the decision making within the ML model. It may not provide technical or domain insight (for example regarding physical principles) or suggest the right course of action to take. Technical documentation and other information sources like an operations diary or operator shiftbooks contain such information and may be linked to the explanation of a machine learning model explanation.

This disclosure proposes to use technical names associated with the sample and terms associated with perturbation of the data to build short descriptions for the domain user, create visualizations (e.g. highlighting location in a drawing of the technical system) or to generate search strings to search for relevant documents. To do so, the system looks up relevant locations (plant sections, subsystems) based on the technical names associated with input (e.g. signal names, event sources). This may be done in a lookup table (technical name x location) or in suitable documents (e.g. P&ID with e.g. their title as location). Natural language description associated with the perturbations (`too high', `outliers in', `oscillation in') can be used to provide a natural language description. The location and the type of perturbation (e.g. as captured by associated NL term) can be highlighted in a visualization of the technical system. Finally, the combination of location and natural language description associated with the perturbation can be used to build search strings. These search strings can then be used to find relevant text in technical documentation or other relevant documents. Thus, a system and method are provided for:-
o Providing information on the location of e.g. anomalies detected by black box ML model.
∘ Providing a natural language description of explanation of an ML model and thus explaining e.g. an anomaly or the symptoms and possibly causes of an upcoming event.
∘ Providing relevant technical documentation and other documents matching the machine learning model output.

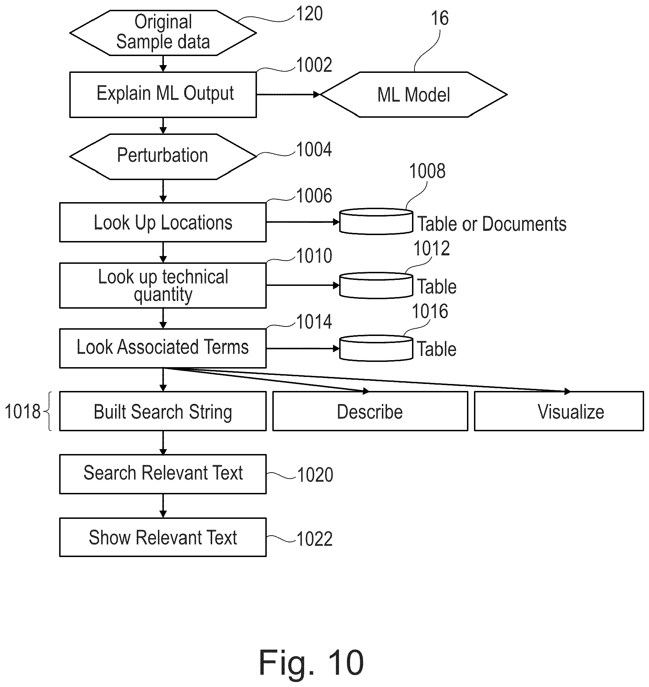

The system and methods for contextualizing explanations may be further understood with reference to figure 10, which shows the contextualisation process. First, the machine learning output is explained at 1002 using the ML model 16. The output of this step indicates the perturbations 1004 that have significant impact on the ML model, as described above. In the next step, at 1006, the technical names associated with the perturbations (e.g. signal name, events sources [device or sensor name], parts recognized on image) are used to look up the location of the reason of the model output (detected event or the reason for the event prediction). This can be done in a look-up table or from suitable documents (e.g. P&ID diagram where the title identifies a plant section or operator screens with a title), indicated at 1008. This adds the location context to the explanation. If the majority of perturbations are in a few locations, less frequent locations might be not shown or only in a detailed view.

In step 1010, the technical properties related to the perturbations are identified. The technical property might by a physical quantity (temperature, pressure) or a categorical information (communication event). The technical properties might be extracted from a look up table 1012 or derived by rules from the technical names (e.g. technical names of pressure signals start with P). In step 1014, natural language terms associated with the perturbations are identified. Each possible perturbation type (outlier removal, increasing, decreasing the value) is associated with natural language terms (`outliers in signal', 'too low',' to high', 'to many'). In some cases, like injection of historical data, the natural language terms may be associated by comparing the perturbed segment with the original data (was the value lowered or increased, were outlier removed, etc.). The context information build up so far can be used to describe the explanation to the user. For instance, the location can be given in combination with the technical properties and the natural language terms. 'Pressure signals in plant section A are too high' or `The temperature in the reactor is too low'. Such description can be generated with templates: <Physical Quantity> in <Location> are <natural language term> or be generated with help of generative ML models. In a similar fashion search strings can be generated at 1018 and a text search in a document database can be performed at 1020. The found text (documents, paragraphs) is presented to the user at 1022. As an optional step, a ML model can add additional information if the text contains a description (of the system, of an failure) or instructions how to handle a situation.

From the above, it is clear that one or more computer programs, comprising machine-readable instructions that, can be provided which when executed on one or more computers, cause the one or more computers to perform the described and claimed methods. Also, from the above it is clear that a non-transitory computer storage medium, and/or a download product, can comprises the one or more computer programs. One or more computers can then operate with the one or more computer programs. One or more computers can then comprise the non-transitory computer storage medium and/or the download product.

While the invention has been illustrated and described in detail in the drawing and foregoing description, such illustration and description are to be considered illustrative or exemplary and not restrictive. The invention is not limited to the disclosed embodiments. The invention is set out in the appended set of claims.

## Claims

1. An explainer system (100) for explaining output of a prediction system (10) comprising a system-monitor machine learning model (16) trained to predict states of a monitored system (12), wherein the monitored system comprises industrial equipment, the explainer system comprising:
a perturbator (102) configured to apply predetermined perturbations to original sample data (120, 122) collected from the monitored system (12) to produce perturbed sample data (108, 130), the explainer system being configured to input the perturbed sample data (108, 130) to the prediction system (10);
a tester (104) configured to receive model output from the prediction system (10), the model output comprising original model output (110) produced by the system-monitor machine learning model (16) based on the original sample data (120, 122) and deviated model output (126) produced by the system-monitor machine learning model (16) based on the perturbed sample data (108, 130), the deviated model output (126) comprising deviations from the original model output (110), the deviations resulting from the applied perturbations; the original model output (110) comprising a prediction concerning one or more of (i) a future state of the monitored system; (ii) a current state of the monitored system; (iii) a problem or fault in the monitored system; and
an extractor (106) configured to receive data (128) defining the perturbations and the resulting deviations and to extract therefrom important features (124) for explaining the model output.

2. The system of claim 1, wherein the perturbator (102) is configured to determine the perturbations to be applied using one or more (i) random selection, (ii) optimization, and (iii) machine learning.

3. The system of claim 2, wherein the perturbator (102) comprises a search optimizer (400) configured to use an iterative optimization algorithm whose objective function maximizes the deviation in output caused by candidate perturbations when perturbed sample data comprising the applied candidate perturbations are input to the system-monitor machine learning model (16), and wherein the perturbator (102) is configured to apply the candidate perturbations determined by the search optimizer (400) to be associated with the largest deviations.

4. The system of claim 3, wherein the search optimizer (400) is configured, iteratively and until completion of the optimization:
to generate one or more current-iteration candidate perturbations by modifying one or more previous-iteration candidate perturbations in accordance with the optimization algorithm,
to provide perturbed sample data (402) comprising the applied current-iteration candidate perturbations to the prediction system (10) for input to the system-monitor machine learning model (16), and
to receive, as feedback (404), deviated output produced by the system-monitor machine learning model (16) based on the perturbed sample data (402), and to determine from the feedback (404) a deviation caused by the current-iteration candidate perturbations.

5. The system of claim 1 or 2, further comprising one or more of:
(i) a first perturbation selector machine learning model (512) configured to receive as training data perturbed segment-deviation pairs (508, 510) and to learn to select perturbations that result in significant deviations in the model output of the system-monitor machine learning model (16);
(ii) a second perturbation selector machine learning model (514) configured to receive as training data the perturbed segment-deviation pairs and to learn to select significant perturbations that do not result in significant deviations in the model output.

6. The system of claim 1 or 2, further comprising one or more of:
(i) a first perturbation selector machine learning model (612) trainable to select perturbations which result in significant deviations in the model output of the system-monitor machine learning model (16) and for which the respective perturbed samples (606), when input to a discriminator machine learning model (616) trained to classify samples collected from the monitored system (12) as original or unperturbed, are classified by the discriminator machine learning model as original samples;
(ii) a second perturbation selector machine learning model (614) trainable to select significant perturbations which do not result in significant deviations in the model output of the system-monitor machine learning model and for which the respective perturbed samples, when input to the discriminator machine learning model, are classified thereby as original samples.

7. The system of claim 5 or 6, comprising both the first and second perturbation selector maching learning models (512, 514; 612, 614), and further comprising a perturbation finder (700) configured to receive perturbed samples (506, 606) created by both the first and second perturbation selector machine learning models, and to output one or more of the perturbations contained in the perturbed samples as the predetermined perturbations.

8. The system of any preceding claim, wherein the original sample data is unpreprocessed original sample data (120) collected from the monitored system (12), and wherein the perturbator (102) is configured to apply the perturbations to the unpreprocessed original sample data (120) to produce unpreprocessed perturbed sample data (108), before the unpreprocessed perturbed sample data (108) is formatted by a pre-processor (14) to produce preprocessed perturbed sample data (130) suitable for input to the system-monitor machine learning model (16).

9. The system of any preceding claim, wherein the original sample data (120, 122) comprise one or more of (i) time-series data comprising sensor readings from the industrial equipment, wherein the machine learning model (16) is configured to make predictions regarding production quality or to detect anomalies in the time-series data; (ii) event data, wherein the machine learning model (16) is configured to detect anomalies or to predict alarms in the industrial equipment; (iii) image data, wherein the machine learning model (16) is configured to detect anomalies in the industrial equipment.

10. The system of any preceding claim, wherein the perturbator (102) is configured to apply the perturbations by oversampling the original sample data (120, 122), the oversampling comprising clustering samples in the original sample data and generating new samples from within the clusters.

11. The system of any preceding claim, wherein the original sample data (120, 122) comprise images, wherein the perturbator (102) is configured to apply the perturbations using data augmentation techniques.

12. The system of any preceding claim, wherein the extractor (106) is configured to use an interpretable model to extract the important features (124) for explaining the model output.

13. The system of claim 12, wherein the tester (104) is further configured to identify the deviations between the deviated model output (126) and the original model output (110) and to map the identified deviations to the applied perturbations to provide mapped perturbed segment-deviation pairs as input data (128) for the interpretable model.

14. A method for explaining output of a prediction system (10) comprising a system-monitor machine learning model (16) trained to predict states of a monitored system (12), wherein the monitored system comprises industrial equipment, the method comprising:
applying (207) predetermined perturbations to original sample data (120, 122) collected from the monitored system (12) to produce perturbed sample data (108, 130), and inputting the perturbed sample data (108, 130) to the prediction system (10);
receiving model output from the prediction system (10), the model output comprising original model output (110) produced by the system-monitor machine learning model (16) based on the original sample data (120, 122) and deviated model output (126) produced by the system-monitor machine learning model (16) based on the perturbed sample data (108, 130), the deviated model output (126) comprising deviations from the original model output (110), the deviations resulting from the applied perturbations; the original model output (110) comprising a prediction concerning one or more of (i) a future state of the monitored system; (ii) a current state of the monitored system; (iii) a problem or fault in the monitored system; and
extracting (214) important features (124) for explaining the model output from data (128) defining the perturbations and the resulting deviations.

15. A computer program product comprising instructions which, when executed by a computer, cause the computer to perform the method of claim 14.

## Patentansprüche

1. Erklärungssystem (100) zur Erklärung der Ausgabe eines Vorhersagesystems (10), das ein Systemüberwachungs-Maschinenlernmodell (16) umfasst, das darauf trainiert ist, Zustände eines überwachten Systems (12) vorherzusagen, wobei das überwachte System Industrieanlagen umfasst, wobei das Erklärungssystem Folgendes umfasst:
einen Perturbator (102), der konfiguriert ist, vorbestimmte Störungen auf ursprüngliche Beispieldaten (120, 122) anzuwenden, die vom überwachten System (12) gesammelt wurden, um gestörte Beispieldaten (108, 130) zu erzeugen, wobei das Erklärungssystem so konfiguriert ist, dass es die gestörten Beispieldaten (108, 130) dem Vorhersagesystem (10) zuführt;
einen Tester (104), der konfiguriert ist, die Modellausgabe vom Vorhersagesystem (10) zu empfangen, wobei die Modellausgabe die ursprüngliche Modellausgabe (110) umfasst, die durch das Systemüberwachungs-Maschinenlernmodell (16) basierend auf den ursprünglichen Beispieldaten (120, 122) erzeugt wurde, und die abweichende Modellausgabe (126), die durch das Systemüberwachungs-Maschinenlernmodell (16) basierend auf den gestörten Beispieldaten (108, 130) erzeugt wurde, wobei die abweichende Modellausgabe (126) Abweichungen von der ursprünglichen Modellausgabe (110) umfasst, die durch die angewendeten Störungen verursacht wurden; die ursprüngliche Modellausgabe (110) eine Vorhersage in Bezug auf eines oder mehrere der folgenden Elemente umfasst: (i) einen zukünftigen Zustand des überwachten Systems; (ii) einen aktuellen Zustand des überwachten Systems; (iii) ein Problem oder einen Fehler im überwachten System; und
einen Extraktor (106), der konfiguriert ist, Daten (128) zu empfangen, die die Störungen und die daraus resultierenden Abweichungen definieren, und daraus wichtige Merkmale (124) zur Erklärung der Modellausgabe zu extrahieren.

2. System nach Anspruch 1, wobei der Perturbator (102) konfiguriert ist, die anzuwendenden Störungen unter Verwendung eines oder mehrerer der folgenden Elemente zu bestimmen: (i) zufällige Auswahl, (ii) Optimierung und (iii) maschinelles Lernen.

3. System nach Anspruch 2, wobei der Perturbator (102) einen Suchoptimierer (400) umfasst, der konfiguriert ist, einen iterativen Optimierungsalgorithmus zu verwenden, dessen Zielfunktion die Abweichung in der Ausgabe maximiert, die durch Kandidatenstörungen verursacht wird, wenn gestörte Beispieldaten, die die angewendeten Kandidatenstörungen umfassen, dem Systemüberwachungs-Maschinenlernmodell (16) zugeführt werden, und wobei der Perturbator (102) so konfiguriert ist, die durch den Suchoptimierer (400) bestimmten Kandidatenstörungen, die mit den größten Abweichungen verbunden sind, anzuwenden.

4. System nach Anspruch 3, wobei der Suchoptimierer (400) konfiguriert ist, iterativ und bis zum Abschluss der Optimierung:
eine oder mehrere Kandidatenstörungen der aktuellen Iteration zu erzeugen, indem eine oder mehrere Kandidatenstörungen der vorherigen Iteration gemäß dem Optimierungsalgorithmus modifiziert werden,
gestörte Beispieldaten (402), die die angewendeten Kandidatenstörungen der aktuellen Iteration umfassen, dem Vorhersagesystem (10) zur Eingabe in das Systemüberwachungs-Maschinenlernmodell (16) zuzuführen, und
als Rückmeldung (404) die abweichende Ausgabe zu empfangen, die durch das Systemüberwachungs-Maschinenlernmodell (16) basierend auf den gestörten Beispieldaten (402) erzeugt wird, und aus der Rückmeldung (404) eine durch die Kandidatenstörungen der aktuellen Iteration verursachte Abweichung zu bestimmen.

5. System nach Anspruch 1 oder 2, ferner umfassend eines oder mehrere der folgenden Elemente:
(i) ein erstes Perturbationsauswahl-Maschinenlernmodell (512), das konfiguriert ist, als Trainingsdaten gestörte Segment-Abweichungspaare (508, 510) zu empfangen und zu lernen, Störungen auszuwählen, die zu signifikanten Abweichungen in der Modellausgabe des Systemüberwachungs-Maschinenlernmodells (16) führen;
(ii) ein zweites Perturbationsauswahl-Maschinenlernmodell (514), das konfiguriert ist, als Trainingsdaten die gestörten Segment-Abweichungspaare zu empfangen und zu lernen, signifikante Störungen auszuwählen, die nicht zu signifikanten Abweichungen in der Modellausgabe führen.

6. System nach Anspruch 1 oder 2, ferner umfassend eines oder mehrere der folgenden Elemente:
(i) ein erstes Perturbationsauswahl-Maschinenlernmodell (612), das trainierbar ist, Störungen auszuwählen, die zu signifikanten Abweichungen in der Modellausgabe des Systemüberwachungs-Maschinenlernmodells (16) führen und für die die jeweiligen gestörten Beispiele (606), wenn sie einem Diskriminator-Maschinenlernmodell (616) zugeführt werden, das darauf trainiert ist, Beispiele, die vom überwachten System (12) gesammelt wurden, als original oder ungestört zu klassifizieren, vom Diskriminator-Maschinenlernmodell als originale Beispiele klassifiziert werden;
(ii) ein zweites Perturbationsauswahl-Maschinenlernmodell (614), das trainierbar ist, signifikante Störungen auszuwählen, die nicht zu signifikanten Abweichungen in der Modellausgabe des Systemüberwachungs-Maschinenlernmodells führen und für die die jeweiligen gestörten Beispiele, wenn sie dem Diskriminator-Maschinenlernmodell zugeführt werden, als originale Beispiele klassifiziert werden.

7. System nach Anspruch 5 oder 6, umfassend sowohl das erste als auch das zweite Perturbationsauswahl-Maschinenlernmodell (512, 514; 612, 614), und ferner umfassend einen Perturbationsfinder (700), der konfiguriert ist, gestörte Beispiele (506, 606) zu empfangen, die sowohl durch das erste als auch das zweite Perturbationsauswahl-Maschinenlernmodell erzeugt wurden, und eine oder mehrere der in den gestörten Beispielen enthaltenen Störungen als die vorbestimmten Störungen auszugeben.

8. System nach einem der vorhergehenden Ansprüche, wobei die ursprünglichen Beispieldaten unvorverarbeitete ursprüngliche Beispieldaten (120) sind, die vom überwachten System (12) gesammelt wurden, und wobei der Perturbator (102) konfiguriert ist, die Störungen auf die unvorverarbeiteten ursprünglichen Beispieldaten (120) anzuwenden, um unvorverarbeitete gestörte Beispieldaten (108) zu erzeugen, bevor die unvorverarbeiteten gestörten Beispieldaten (108) durch einen Vorprozessor (14) formatiert werden, um vorverarbeitete gestörte Beispieldaten (130) zu erzeugen, die für die Eingabe in das Systemüberwachungs-Maschinenlernmodell (16) geeignet sind.

9. System nach einem der vorhergehenden Ansprüche, wobei die ursprünglichen Beispieldaten (120, 122) eines oder mehrere der folgenden Elemente umfassen: (i) Zeitreihendaten, die Sensormesswerte der Industrieanlagen umfassen, wobei das Maschinenlernmodell (16) konfiguriert ist, Vorhersagen in Bezug auf die Produktionsqualität zu treffen oder Anomalien in den Zeitreihendaten zu erkennen; (ii) Ereignisdaten, wobei das Maschinenlernmodell (16) konfiguriert ist, Anomalien zu erkennen oder Alarme in den Industrieanlagen vorherzusagen; (iii) Bilddaten, wobei das Maschinenlernmodell (16) konfiguriert ist, Anomalien in den Industrieanlagen zu erkennen.

10. System nach einem der vorhergehenden Ansprüche, wobei der Perturbator (102) konfiguriert ist, die Störungen durch Übersampling der ursprünglichen Beispieldaten (120, 122) anzuwenden, wobei das Übersampling das Clustern von Beispielen in den ursprünglichen Beispieldaten und das Erzeugen neuer Beispiele innerhalb der Cluster umfasst.

11. System nach einem der vorhergehenden Ansprüche, wobei die ursprünglichen Beispieldaten (120, 122) Bilder umfassen, wobei der Perturbator (102) konfiguriert ist, die Störungen unter Verwendung von Techniken zur Datenaugmentation anzuwenden.

12. System nach einem der vorhergehenden Ansprüche, wobei der Extraktor (106) konfiguriert ist, ein interpretierbares Modell zu verwenden, um die wichtigen Merkmale (124) zur Erklärung der Modellausgabe zu extrahieren.

13. System nach Anspruch 12, wobei der Tester (104) ferner konfiguriert ist, die Abweichungen zwischen der abweichenden Modellausgabe (126) und der ursprünglichen Modellausgabe (110) zu identifizieren und die identifizierten Abweichungen den angewendeten Störungen zuzuordnen, um die zugeordneten gestörten Segment-Abweichungspaare als Eingabedaten (128) für das interpretierbare Modell bereitzustellen.

14. Verfahren zur Erklärung der Ausgabe eines Vorhersagesystems (10), das ein Systemüberwachungs-Maschinenlernmodell (16) umfasst, das darauf trainiert ist, Zustände eines überwachten Systems (12) vorherzusagen, wobei das überwachte System Industrieanlagen umfasst, wobei das Verfahren Folgendes umfasst:
Anwenden (207) von vorbestimmten Störungen auf ursprüngliche Beispieldaten (120, 122), die vom überwachten System (12) gesammelt wurden, um gestörte Beispieldaten (108, 130) zu erzeugen, und Eingeben der gestörten Beispieldaten (108, 130) in das Vorhersagesystem (10);
Empfangen der Modellausgabe vom Vorhersagesystem (10), wobei die Modellausgabe die ursprüngliche Modellausgabe (110) umfasst, die durch das Systemüberwachungs-Maschinenlernmodell (16) basierend auf den ursprünglichen Beispieldaten (120, 122) erzeugt wurde, und die abweichende Modellausgabe (126), die durch das Systemüberwachungs-Maschinenlernmodell (16) basierend auf den gestörten Beispieldaten (108, 130) erzeugt wurde, wobei die abweichende Modellausgabe (126) Abweichungen von der ursprünglichen Modellausgabe (110) umfasst, die durch die angewendeten Störungen verursacht wurden; die ursprüngliche Modellausgabe (110) eine Vorhersage in Bezug auf eines oder mehrere der folgenden Elemente umfasst: (i) einen zukünftigen Zustand des überwachten Systems;
(ii) einen aktuellen Zustand des überwachten Systems; (iii) ein Problem oder einen Fehler im überwachten System; und
Extrahieren (214) wichtiger Merkmale (124) zur Erklärung der Modellausgabe aus Daten (128), die die Störungen und die daraus resultierenden Abweichungen definieren.

15. Computerprogrammprodukt, umfassend Anweisungen, die, wenn sie von einem Computer ausgeführt werden, den Computer veranlassen, das Verfahren nach Anspruch 14 durchzuführen.

## Revendications

1. Système explicatif (100) destiné à expliquer la sortie d'un système de prédiction (10) comprenant un modèle d'apprentissage automatique de surveillance de système (16) entraîné à prédire des états d'un système surveillé (12), le système surveillé comprenant un équipement industriel, le système explicatif comprenant :
un perturbateur (102) conçu pour appliquer des perturbations prédéterminées à des données échantillonnées initiales (120, 122) collectées à partir du système surveillé (12) pour produire des données échantillonnées perturbées (108, 130), le système explicatif étant conçu pour entrer les données échantillonnées perturbées (108, 130) dans le système de prédiction (10) ;
un testeur (104) conçu pour recevoir une sortie de modèle provenant du système de prédiction (10), la sortie de modèle comprenant une sortie de modèle initiale (110) produite par le modèle d'apprentissage automatique de surveillance de système (16) sur la base des données échantillonnées initiales (120, 122) et une sortie de modèle divergente (126) produite par le modèle d'apprentissage automatique de surveillance de système (16) sur la base des données échantillonnées perturbées (108, 130), la sortie de modèle divergente (126) comprenant des écarts par rapport à la sortie de modèle initiale (110), les écarts résultant des perturbations appliquées ; la sortie de modèle initiale (110) comprenant une prédiction concernant un ou plusieurs éléments parmi (i) un état futur du système surveillé ; (ii) un état présent du système surveillé ; (iii) un problème ou défaut dans le système surveillé ; et
un extracteur (106) conçu pour recevoir des données (128) définissant les perturbations et les écarts résultants et pour en extraire des caractéristiques importantes (124) en vue d'expliquer la sortie de modèle.

2. Système selon la revendication 1, dans lequel le perturbateur (102) est conçu pour déterminer les perturbations devant être appliquées en utilisant un ou plusieurs éléments parmi (i) une sélection aléatoire, (ii) une optimisation, et (iii) un apprentissage automatique.

3. Système selon la revendication 2, dans lequel le perturbateur (102) comprend un optimiseur de recherche (400) conçu pour utiliser un algorithme d'optimisation itératif dont la fonction objectif maximise l'écart dans la sortie provoqué par des perturbations candidates quand des données échantillonnées perturbées comprenant les perturbations candidates appliquées sont entrées dans le modèle d'apprentissage automatique de surveillance de système (16), et dans lequel le perturbateur (102) est conçu pour appliquer les perturbations candidates déterminées par l'optimiseur de recherche (400) comme étant associées aux écarts les plus grands.

4. Système selon la revendication 3, dans lequel l'optimiseur de recherche (400) est conçu, de façon itérative et jusqu'à l'achèvement de l'optimisation :
pour générer une ou plusieurs perturbations candidates d'itération en cours en modifiant une ou plusieurs perturbations candidates d'itération précédente en fonction de l'algorithme d'optimisation,
pour fournir des données échantillonnées perturbées (402) comprenant les perturbations candidates d'itération en cours appliquées au système de prédiction (10) pour qu'elles soient entrées dans le modèle d'apprentissage automatique de surveillance de système (16), et
pour recevoir, comme retour (404), une sortie divergente produite par le modèle d'apprentissage automatique de surveillance de système (16) sur la base des données échantillonnées perturbées (402), et pour déterminer à partir du retour (404) un écart provoqué par les perturbations candidates d'itération en cours.

5. Système selon la revendication 1 ou 2, comprenant en outre un ou plusieurs éléments parmi :
(i) un premier modèle d'apprentissage automatique de sélection de perturbations (512) conçu pour recevoir comme données d'entraînement des paires segment perturbé-écart (508-510) et pour apprendre à sélectionner des perturbations qui se soldent par des écarts significatifs dans la sortie de modèle du modèle d'apprentissage automatique de surveillance de système (16) ;
(ii) un deuxième modèle d'apprentissage automatique de sélection de perturbations (514) conçu pour recevoir comme données d'entraînement les paires segment perturbé-écart et pour apprendre à sélectionner des perturbations significatives qui ne se soldent pas par des écarts significatifs dans la sortie de modèle.

6. Système selon la revendication 1 ou 2, comprenant en outre un ou plusieurs éléments parmi :
(i) un premier modèle d'apprentissage automatique de sélection de perturbations (612) pouvant être entraîné à sélectionner des perturbations qui se soldent par des écarts significatifs dans la sortie de modèle du modèle d'apprentissage automatique de surveillance de système (16) et pour lesquelles les échantillons perturbés respectifs (606), lorsqu'ils sont entrés dans un modèle d'apprentissage automatique de discrimination (616) entraîné à classer des échantillons collectés à partir du système surveillé (12) comme initiaux ou non perturbés, sont classés par le modèle d'apprentissage automatique de discrimination comme des échantillons initiaux ;
(ii) un deuxième modèle d'apprentissage automatique de sélection de perturbations (614) pouvant être entraîné à sélectionner des perturbations significatives qui ne se soldent pas par des écarts significatifs dans la sortie de modèle du modèle d'apprentissage automatique de surveillance de système et pour lesquelles les échantillons perturbés respectifs, lorsqu'ils sont entrés dans le modèle d'apprentissage automatique de discrimination, sont de ce fait classés comme des échantillons initiaux.

7. Système selon la revendication 5 ou 6, comprenant à la fois le premier et le deuxième modèle d'apprentissage automatique de sélection de perturbations (512, 514 ; 612, 614), et comprenant en outre un détecteur de perturbations (700) conçu pour recevoir des échantillons perturbés (506, 606) créés à la fois par le premier et le deuxième modèle d'apprentissage automatique de sélection de perturbations, et pour délivrer une ou plusieurs des perturbations contenues dans les échantillons perturbés comme les perturbations prédéterminées.

8. Système selon une quelconque revendication précédente, dans lequel les données échantillonnées initiales sont des données échantillonnées initiales non prétraitées (120) collectées à partir du système surveillé (12), et dans lequel le perturbateur (102) est conçu pour appliquer les perturbations aux données échantillonnées initiales non prétraitées (120) pour produire des données échantillonnées non prétraitées perturbées (108), avant que les données échantillonnées non prétraitées perturbées (108) soient formatées par un préprocesseur (14) pour produire des données échantillonnées non prétraitées perturbées (130) appropriées pour être entrées dans le modèle d'apprentissage automatique de surveillance système (16) .

9. Système selon une quelconque revendication précédente, dans lequel les données échantillonnées initiales (120, 122) en comprennent une ou plusieurs parmi (i) des données de séries chronologiques comprenant des lectures de capteurs provenant de l'équipement industriel, le modèle d'apprentissage automatique (16) étant conçu pour faire des prédictions concernant la qualité de production ou pour détecter des anomalies dans les données de séries chronologiques ; (ii) des données d'événements, le modèle d'apprentissage automatique (16) étant conçu pour détecter des anomalies ou pour prédire des alarmes dans l'équipement industriel ; (iii) des données d'images, le modèle d'apprentissage automatique (16) étant conçu pour détecter des anomalies dans l'équipement industriel.

10. Système selon une quelconque revendication précédente, dans lequel le perturbateur (102) est conçu pour appliquer les perturbations en suréchantillonnant les données échantillonnées initiales (120, 122), le suréchantillonnage comprenant le regroupement d'échantillons dans les données échantillonnées initiales et la génération de nouveaux échantillons à partir de l'intérieur des groupes.

11. Système selon une quelconque revendication précédente, dans lequel les données échantillonnées initiales (120, 122) comprennent des images, le perturbateur (102) étant conçu pour appliquer les perturbations en utilisant des techniques d'augmentation de données.

12. Système selon une quelconque revendication précédente, dans lequel l'extracteur (106) est conçu pour utiliser un modèle interprétable pour extraire les caractéristiques importantes (124) en vue d'expliquer la sortie de modèle.

13. Système selon la revendication 12, dans lequel le testeur (104) est également conçu pour identifier les écarts entre la sortie de modèle divergente (126) et la sortie de modèle initiale (110) et pour mettre les écarts identifiés en correspondance avec les perturbations appliquées pour fournir des paires segment perturbé-écart mis en correspondance comme données d'entrée (128) pour le modèle interprétable.

14. Procédé destiné à expliquer la sortie d'un système de prédiction (10) comprenant un modèle d'apprentissage automatique de surveillance de système (16) entraîné à prédire des états d'un système surveillé (12), le système surveillé comprenant un équipement industriel, le procédé comprenant :
l'application (207) de perturbations prédéterminées à des données échantillonnées initiales (120, 122) collectées à partir du système surveillé (12) pour produire des données échantillonnées perturbées (108, 130), et l'entrée des données échantillonnées perturbées (108, 130) dans le système de prédiction (10) ;
la réception d'une sortie de modèle provenant du système de prédiction (10), la sortie de modèle comprenant une sortie de modèle initiale (110) produite par le modèle d'apprentissage automatique de surveillance de système (16) sur la base des données échantillonnées initiales (120, 122) et une sortie de modèle divergente (126) produite par le modèle d'apprentissage automatique de surveillance de système (16) sur la base des données échantillonnées perturbées (108, 130), la sortie de modèle divergente (126) comprenant des écarts par rapport à la sortie de modèle initiale (110), les écarts résultant des perturbations appliquées ; la sortie de modèle initiale (110) comprenant une prédiction concernant un ou plusieurs éléments parmi (i) un état futur du système surveillé ; (ii) un état présent du système surveillé ; (iii) un problème ou défaut dans le système surveillé ; et
l'extraction (214) de caractéristiques importantes (124) en vue d'expliquer la sortie de modèle à partir de données (128) définissant les perturbations et les écarts résultants.

15. Produit-programme informatique comprenant des instructions qui, lorsqu'elles sont exécutées par un ordinateur, conduisent l'ordinateur à effectuer le procédé de la revendication 14.
